# EUROPEAN PATENT APPLICATION

(11) **EP 4 675 403 A1**
(43) Date of publication of application: **07.01.2026**
(21) Application number: 23925214.1
(22) Date of filing: 28.02.2023
(51) Int. Cl.: G06F 3/0338

(54) **INPUT DEVICE AND CONTROLLER**

(71) Applicant: Nintendo Co., Ltd., Kyoto-shi, Kyoto 601-8501 (JP)
(72) Inventor: OKAMURA, Takanori, Kyoto-shi, Kyoto 601-8501 (JP); TAKEI, Masaya, Kyoto-shi, Kyoto 601-8501 (JP); KUMAZAKI, Daisuke, Kyoto-shi, Kyoto 601-8501 (JP); AMANO, Yasuhiro, Kyoto-shi, Kyoto 601-8501 (JP)
(74) Representative: Bardehle Pagenberg Partnerschaft mbB Patentanwälte Rechtsanwälte
(86) International application number: PCT/JP2023/007290
(87) International publication number: WO 2024/180657

(57) **Abstract**

An input device and a controller can maintain the contact between a head of an operable member and a cover. The input device includes a module housing, and an operable member protruding from a surface of the module housing. The operable member is tiltable or slidable in a plane direction parallel to the surface of the module housing. The operable member includes a shaft, a head, a cover, and a cover protector. The shaft extends in a direction intersecting with the plane direction of the module housing. The head is located outside the module housing and is connected to an end of the shaft. The head extends in the plane direction. The cover covers an upper portion and a lower portion of the head. The cover protector surrounds the shaft. The cover protector is in contact with a portion of the cover covering the lower portion of the head.

## Description

### TECHNICAL FIELD

The disclosure relates to an input device and a controller each including an operable member that is tiltable or slidable.

### BACKGROUND ART

Known controllers of this type can have various structures. For example, Patent Literature 1 (Japanese Unexamined Patent Application Publication No. 2011-143216) describes a game controller including a cover placed over the head of an operable member.

### CITATION LIST

### PATENT LITERATURE

Patent Literature 1: Japanese Unexamined Patent Application Publication No. 2011-143216

### SUMMARY OF THE INVENTION

### PROBLEMS TO BE SOLVED BY THE INVENTION

Known input devices and controllers are to be improved to maintain the contact between the head of the operable member and the cover.

One or more aspects of the disclosure are directed to an input device and a controller that can maintain the contact between a head of an operable member and a cover.

### SOLUTIONS TO THE PROBLEMS

In response to the above, an input device according to an aspect of the disclosure includes a module housing, and an operable member protruding from a surface of the module housing. The operable member is tiltable or slidable in a plane direction parallel to the surface of the module housing. The operable member includes a shaft, a head, a cover, and a cover protector. The shaft extends in a direction intersecting with the plane direction of the module housing. The head is located outside the module housing and is connected to an end of the shaft. The head extends in the plane direction. The cover covers an upper portion and a lower portion of the head. The cover protector surrounds the shaft. The cover protector is in contact with a portion of the cover covering the lower portion of the head.

A controller according to an aspect of the disclosure includes a controller housing grippable by a user, and an operable member partly protruding from a surface of the controller housing. The operable member is tiltable or slidable in a plane direction parallel to the surface of the controller housing. The operable member includes a shaft, a head, a cover, and a cover protector. The shaft extends, in a direction intersecting with the plane direction, from an inside to an outside of the controller housing. The head is located outside the controller housing and is connected to an end of the shaft. The head extends in the plane direction. The cover covers an upper portion and a lower portion of the head. The cover protector is located outside the controller housing. The cover protector surrounds the shaft and faces a portion of the cover covering the lower portion.

### EFFECTS OF THE INVENTION

The input device and the controller according to the above aspects of the disclosure can maintain the contact between the head of the operable member and the cover.

### BRIEF DESCRIPTION OF THE DRAWINGS

Fig. 1 is a schematic plan view of a controller according to an embodiment of the disclosure.
Fig. 2 is a sectional view taken along line A1-A1 in Fig. 1.
Fig. 3 is a plan view of an operable member included in the controller in Fig. 1 when viewed from above.
Fig. 4 is a schematic partial sectional view of an input device and a controller according to a first modification of the disclosure.
Fig. 5 is a schematic partial sectional view of an input device and a controller according to a second modification of the disclosure.
Fig. 6 is a schematic partial sectional view of an input device and a controller according to a third modification of the disclosure.
Fig. 7 is a schematic partial sectional view of an input device and a controller according to a fourth modification of the disclosure.
Fig. 8 is a schematic partial sectional view of an input device and a controller according to a fifth modification of the disclosure.
Fig. 9 is a schematic partial sectional view of an input device and a controller according to a sixth modification of the disclosure.
Fig. 10 is a schematic partial sectional view of an input device and a controller according to a seventh modification of the disclosure.
Fig. 11 is a schematic partial sectional view of an input device and a controller according to an eighth modification of the disclosure.

### DETAILED DESCRIPTION

An input device according to a first aspect of the disclosure includes a module housing, and an operable member protruding from a surface of the module housing. The operable member is tiltable or slidable in a plane direction parallel to the surface of the module housing. The operable member includes a shaft, a head, a cover, and a cover protector. The shaft extends in a direction intersecting with the plane direction of the module housing. The head is located outside the module housing and is connected to an end of the shaft. The head extends in the plane direction. The cover covers an upper portion and a lower portion of the head. The cover protector surrounds the shaft. The cover protector is in contact with a portion of the cover covering the lower portion of the head.

An input device according to a second aspect of the disclosure is the input device according to the first aspect in which the cover is between the head and the cover protector in the direction in which the shaft extends.

An input device according to a third aspect of the disclosure is the input device according to the first aspect or the second aspect in which the cover protector protrudes from the shaft in the plane direction.

An input device according to a fourth aspect of the disclosure is the input device according to any one of the first to third aspects in which the cover has an edge surrounding the shaft at a position adjacent to the lower portion of the head. The cover protector covers the edge of the cover.

An input device according to a fifth aspect of the disclosure is the input device according to any one of the first to fourth aspects in which the cover has an edge in contact with the shaft at a position adjacent to the lower portion of the head.

An input device according to a sixth aspect of the disclosure is the input device according to any one of the first to fifth aspects in which the cover protector has a smaller profile than the cover when viewed in the direction in which the shaft extends.

An input device according to a seventh aspect of the disclosure is the input device according to any one of the first to sixth aspects in which the head includes a step recessed from an outer peripheral portion of the head in the direction in which the shaft extends away from the module housing. The outer peripheral portion is located outward from an outer edge of the cover protector when viewed in the direction in which the shaft extends.

An input device according to an eighth aspect of the disclosure is the input device according to any one of the first to seventh aspects in which the operable member further includes, between the head and the cover protector, a pillar extending in the direction in which the shaft extends. The pillar is in contact with the cover and the head or with the cover and the cover protector.

An input device according to a ninth aspect of the disclosure is the input device according to the eighth aspect in which the pillar extends through the cover in the direction in which the shaft extends, and the pillar is in contact with the head and the cover protector.

A controller according to a tenth aspect of the disclosure includes a controller housing grippable by a user, and an operable member partly protruding from a surface of the controller housing. The operable member is tiltable or slidable in a plane direction parallel to the surface of the controller housing. The operable member includes a shaft, a head, a cover, and a cover protector. The shaft extends, in a direction intersecting with the plane direction, from an inside to an outside of the controller housing. The head is located outside the controller housing and is connected to an end of the shaft. The head extends in the plane direction. The cover covers an upper portion and a lower portion of the head. The cover protector is located outside the controller housing. The cover protector surrounds the shaft and faces a portion of the cover covering the lower portion.

A controller according to an eleventh aspect of the disclosure is the controller according to the tenth aspect in which the cover is between the head and the cover protector in the direction in which the shaft extends.

A controller according to a twelfth aspect of the disclosure is the controller according to the tenth aspect or the eleventh aspect in which the cover protector protrudes from the shaft in the plane direction.

A controller according to a thirteenth aspect of the disclosure is the controller according to any one of the tenth to twelfth aspects in which the cover has an edge surrounding the shaft at a position adjacent to the lower portion of the head. The cover protector covers the edge of the cover.

A controller according to a fourteenth aspect of the disclosure is the controller according to any one of the tenth to thirteenth aspects in which the cover protector surrounds the shaft and is in contact with the cover at a position adjacent to the lower portion of the head.

A controller according to a fifteenth aspect of the disclosure is the controller according to any one of the tenth to fourteenth aspects in which the cover has an edge in contact with the shaft at a position adjacent to the lower portion of the head.

A controller according to a sixteenth aspect of the disclosure is the controller according to any one of the tenth to fifteenth aspects in which the cover protector has a smaller profile than the cover when viewed in the direction in which the shaft extends.

A controller according to a seventeenth aspect of the disclosure is the controller according to any one of the tenth to sixteenth aspects in which the head includes a step recessed from an outer peripheral portion of the head in the direction in which the shaft extends away from the controller housing. The outer peripheral portion is located outward from an outer edge of the cover protector when viewed in the direction in which the shaft extends.

A controller according to an eighteenth aspect of the disclosure is the controller according to any one of the tenth to seventeenth aspects in which the operable member further includes, between the head and the cover protector, a pillar extending in the direction in which the shaft extends. The pillar is in contact with the cover and the head or with the cover and the cover protector.

A controller according to a nineteenth aspect of the disclosure is the controller according to the eighteenth aspect in which the pillar extends through the cover in the direction in which the shaft extends. The pillar is in contact with the head and the cover protector.

Embodiments of the present invention will now be described with reference to the drawings. The present invention is not limited to these embodiments. In the drawings, like reference numerals denote substantially the same components.

For ease of explanation, directional terms such as up, down, lateral, vertical, and height are used herein to describe the components in typical use. These terms are not intended to limit the use or other situations of an input device and a controller according to one or more embodiments of the present invention.

### Embodiments

The structures of an input device and a controller according to an embodiment of the disclosure will now be described. The controller according to one or more embodiments of the disclosure is usable in various electronic devices such as game consoles, smartphones, tablets, and personal computers. In the present embodiment, the controller is connected to a portable or stationary game console wirelessly or with wires.

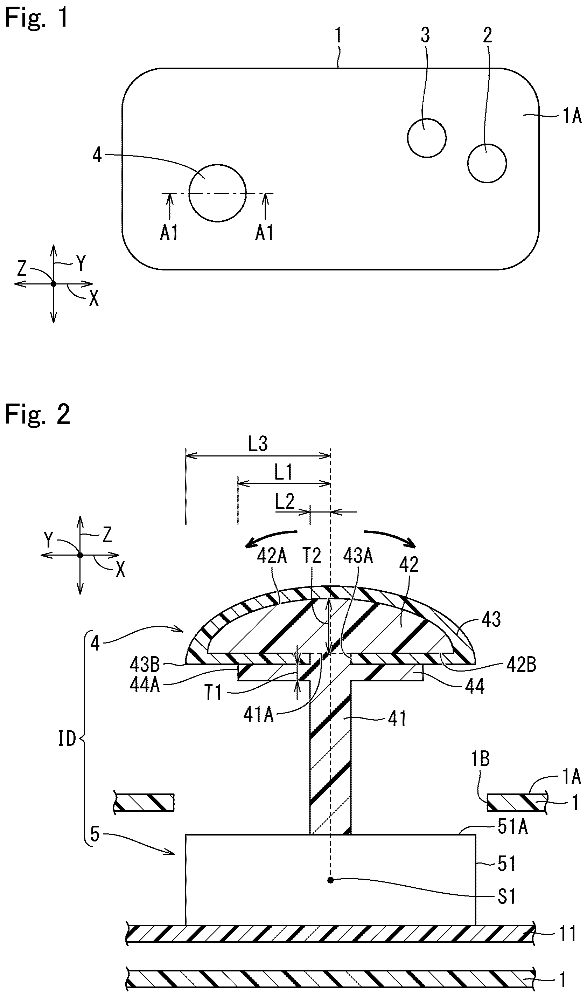

Fig. 1 is a schematic plan view of the controller according to the present embodiment. As shown in Fig. 1, the controller according to the present embodiment includes a controller housing 1, and operation buttons 2 and 3 and an operable member 4 each partly protruding from an upper surface 1A, which is an example of a surface of the controller housing 1.

For ease of explanation, the left-right direction in Fig. 1 is referred to as a lateral direction X, the up-down direction in Fig. 1 is referred to as a vertical direction Y, and the depth direction on the page of Fig. 1 is referred to as a height direction Z. The lateral direction X, the vertical direction Y, and the height direction Z are perpendicular to one another. In the present embodiment, the upper surface 1A of the controller housing 1 is located on a plane parallel to the lateral direction X and the vertical direction Y.

The controller housing 1 is grippable by a user. In the present embodiment, the controller housing 1 is a rectangular prism or a substantially rectangular prism that is hollow and is formed from a resin material such as an acrylonitrile butadiene styrene (ABS) resin. The controller housing 1 may include a grip (not shown) with a shape easily grippable by the user.

The operation buttons 2 and 3 are used for, for example, various operations in games. The operation buttons 2 and 3 can be pressed in the height direction Z from the outside to the inside of the controller housing 1. When not pressed, the operation buttons 2 and 3 are urged by an elastic member such as a spring (not shown) from the inside to the outside of the controller housing 1. In this state, the operation buttons 2 and 3 partly protrude from the upper surface 1A and are exposed outside the controller housing 1. The operation buttons 2 and 3 may not be two operation buttons. A single operation button or three or more operation buttons may be used. The operation buttons 2 and 3 may be located on a surface of the controller housing 1 other than the upper surface 1A.

The operable member 4 is, for example, a stick used for operations in games, or in particular, for directional control. In the present embodiment, the operable member 4 is tiltable in a plane direction, including the lateral direction X and the vertical direction Y, parallel to the upper surface 1A of the controller housing 1.

Fig. 2 is a sectional view taken along line A1-A1 in Fig. 1. As shown in Fig. 2, the controller housing 1 contains a board 11. The board 11 is, for example, a rigid printed circuit board or a flexible printed circuit board. An input device ID is mounted on the board 11. The input device ID includes the operable member 4 described above and a base 5.

The base 5 includes a module housing 51. The module housing 51 is a rectangular prism or a substantially rectangular prism that is hollow. The module housing 51 contains various components such as a support (not shown) supporting the operable member 4 in a tiltable manner and an elastic member (not shown) that causes the operable member 4 to return to its original position before tilting. In the present embodiment, the base 5 is electrically connected to the board 11 with a cable extending from the module housing 51. The base 5 may have one of various known structures. The internal structure of the base 5 is not illustrated in the figures.

The operable member 4 protrudes from an upper surface 51A of the module housing 51, which is an example of a surface of the base 5, through an opening 1B in the upper surface 1A of the controller housing 1. The operable member 4 is tiltable in the plane direction parallel to the upper surface 51A of the module housing 51. More specifically, the operable member 4 in the present embodiment is tiltable about a pivot S1 in the module housing 51, as indicated by the solid arrows in Fig. 2.

The operable member 4 includes a shaft 41 extending in a direction (hereafter referred to as an axial direction) intersecting with the plane direction, which is parallel to the upper surface 51A of the module housing 51, and a head 42 connected to a distal end 41A of the shaft 41 outside the base 5. The head 42 extends in the plane direction.

The shaft 41 is, for example, cylindrical. The shaft 41 extends, in the axial direction intersecting with the plane direction, from the inside to the outside of the controller housing 1. At the original position before tilting, the shaft 41 extends in the height direction Z in the present embodiment.

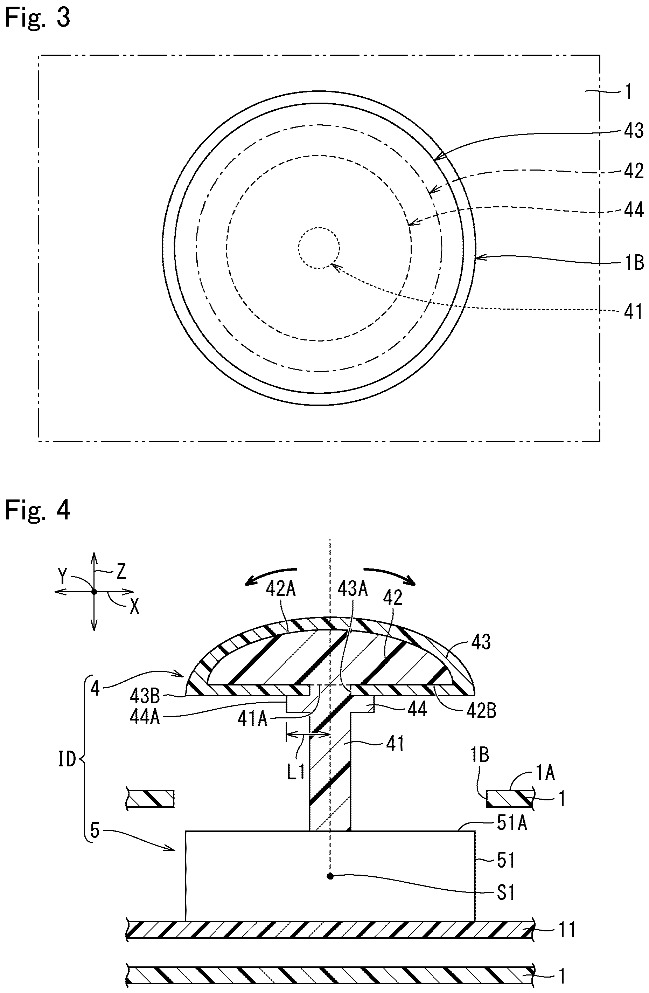

Fig. 3 is a plan view of the operable member 4 when viewed from above. As shown in Fig. 2, the head 42 has a predetermined thickness (a length in the height direction Z). As shown in Fig. 3, the head 42 has a larger profile than the shaft 41 when viewed in the height direction Z. In the present embodiment, the head 42 is hemispherical or substantially hemispherical. In the present embodiment, the shaft 41 and the head 42 are integrally formed from a resin. For example, the shaft 41 and the head 42 are formed from a polyoxymethylene (POM) resin, a polybrominated biphenyl (PBB) resin, or a polyethylene terephthalate (PET) resin. The shaft 41 and the head 42 may be separate components. In this case, the shaft 41 and the head 42 may be formed from the same material (e.g., a resin) or different materials.

A cover 43 is attached to the head 42. In the present embodiment, the cover 43 covers the entire or substantially entire head 42 to prevent the head 42 from being exposed outside. More specifically, the cover 43 covers an upper portion 42A and a lower portion 43B of the head 42. The cover 43 is formed from a resin different from the resin used for the shaft 41 and the head 42. The cover 43 may be formed separately from the head 42 and attached to the head 42. For example, the cover 43 may be formed integrally by injection molding to cover the head 42. In this case, the cover 43 may be formed from a resin with a lower melting temperature than the resin used for the head 42 to reduce the effects of heat on the head 42 during injection molding. The cover 43 may be formed from a resin with a lower coefficient of thermal expansion than the resin used for the head 42. This allows the cover 43 to be more tightly held between the head 42 and a cover protector 44 (described later). The cover 43 is formed from, for example, a soft resin such as an elastomer resin. The cover 43 may be formed from a resin with a higher melting temperature than the resin used for the head 42. The cover 43 may be formed from a resin with a higher coefficient of thermal expansion than the resin used for the head 42.

The cover 43 may cover at least a part of the head 42 to prevent the head 42 from being exposed outside.

The cover protector 44 surrounds the shaft 41. The cover protector 44 maintains the contact between the head 42 and the cover 43 while reducing the likelihood that the user unintentionally touches, with a finger, a portion of the cover 43 adjacent to the shaft 41. In the present embodiment, the cover protector 44 is in contact with the cover 43 outside the controller housing 1.

In the present embodiment, the cover protector 44 is formed from the same resin as used for the shaft 41 and the head 42. More specifically, the cover protector 44 is formed integrally using the same resin as used for the shaft 41 and the head 42. In other words, the cover protector 44 is an annular protrusion protruding outward from the shaft 41. The cover protector 44 is located adjacent to a lower portion 42B of the head 42 and is in contact with an edge 43A of the cover 43 from below. As described above, the head 42 is connected to the distal end 41A of the shaft 41. The cover protector 44 is spaced apart from the head 42 and protrudes in the plane direction from a position partway on the shaft 41. In the present embodiment, the cover 43 is between the head 42 and the cover protector 44 in the axial direction. In other words, the cover protector 44, the cover 43, and the head 42 are nearer the module housing 51 in this order in the axial direction. The cover 43 and the head 42 may be bonded together with an adhesive. Similarly, the cover 43 and the cover protector 44 may be bonded together with an adhesive.

The cover 43 has the edge 43A (inner edge) surrounding the shaft 41 on the lower portion 42B of the head 42. In the present embodiment, the cover 43 has the edge 43A in contact with the shaft 41. The edge 43A of the cover 43 and the shaft 41 may be bonded together with an adhesive. The cover protector 44 covers the edge 43A of the cover 43. In other words, a length L1 from the center of the shaft 41 to an outer edge 44A of the cover protector 44 is longer than a length L2 from the center of the shaft 41 to the edge 43A of the cover 43 when viewed in the axial direction (height direction Z). In such a structure, the cover protector 44 does not protrude beyond the cover 43, thus maintaining the contact between the cover 43 and the head 42 without lowering user operability. The cover protector 44 may at least partly overlap the edge 43A of the cover 43 in the axial direction and may be in contact with the edge 43A of the cover 43. The cover protector 44 has a thickness T1 smaller than a maximum thickness T2 of the head 42.

The cover protector 44 has a smaller profile than the cover 43 when viewed in the axial direction. In other words, the length L1 from the center of the shaft 41 to the outer edge 44A of the cover protector 44 is shorter than a length L3 from the center of the shaft 41 to the outer edge of the cover 43. In the present embodiment, the cover protector 44 and the cover 43 each have a circular profile when viewed in the height direction Z. In the present embodiment, the profiles of the opening 1B, the cover 43, the head 42, the cover protector 44, and the shaft 41 are larger in this order when viewed in the height direction Z. The opening 1B with the largest profile increases the tiltable range of the operable member 4. When the opening 1B has a larger profile than the base 5, the input device ID can be easily mounted on the board 11 through the opening 1B. The opening 1B may have a smaller profile than the cover protector 44, the head 42, or the cover 43 when viewed in the height direction Z. This structure reduces entry of waste or dust through a gap between the shaft 41 and the opening 1B. The profiles of the cover protector 44 and the cover 43 may be any shapes, such as ovals or polygons, when viewed in the height direction Z.

In the present embodiment, the cover protector 44 surrounds the shaft 41 and is in contact with a portion of the cover 43 covering the lower portion 42B of the head 42. This reduces the likelihood that the user unintentionally touches, with a finger, a portion of the cover 43 nearer the shaft 41 than the outer edge 44A of the cover protector 44 in the plane direction, thus maintaining the contact between the head 42 and the cover 43.

In the present embodiment, the cover 43 is between the head 42 and the cover protector 44 in the axial direction. This further reduces the likelihood that the user unintentionally touches, with a finger, the portion of the cover 43 nearer the shaft 41 than the outer edge 44A of the cover protector 44 in the plane direction, thus further maintaining the contact between the head 42 and the cover 43.

In the present embodiment, the cover protector 44 protrudes from the shaft 41 in the plane direction. This further reduces the likelihood that the user unintentionally touches, with a finger, the portion of the cover 43 nearer the shaft 41 than the outer edge 44A of the cover protector 44 in the plane direction, thus further maintaining the contact between the head 42 and the cover 43.

In the present embodiment, the edge 43A of the cover 43 surrounds the shaft 41 on the lower portion 42B of the head 42, and the cover protector 44 covers the edge 43A of the cover 43. This further reduces the likelihood that the user unintentionally touches, with a finger, the portion of the cover 43 nearer the shaft 41 than the outer edge 44A of the cover protector 44 in the plane direction, thus further maintaining the contact between the head 42 and the cover 43.

In the present embodiment, the edge 43A of the cover 43 is in contact with the shaft 41 on the lower portion 42B of the head 42. This further reduces the likelihood that the user unintentionally touches, with a finger, the portion of the cover 43 nearer the shaft 41 than the outer edge 44A of the cover protector 44 in the plane direction, thus further maintaining the contact between the head 42 of the operable member 4 and the cover 43.

In the present embodiment, the cover protector 44 has a smaller profile than the cover 43 when viewed in the axial direction. This reduces the likelihood that the user unintentionally touches the cover protector 44 before touching the cover 43, thus preventing the operability being lowered.

### First Modification

The present invention is not limited to the above embodiment and may be modified in various manners. In the above embodiment, for example, the length L1 from the center of the shaft 41 to the outer edge 44A of the cover protector 44 is longer than the diameter of the opening 1B of the controller housing 1. However, the disclosure is not limited to the above embodiment. As shown in Fig. 4, for example, the length L1 from the center of the shaft 41 to the outer edge 44A of the cover protector 44 may be shorter than the diameter of the opening 1B of the controller housing 1.

### Second Modification

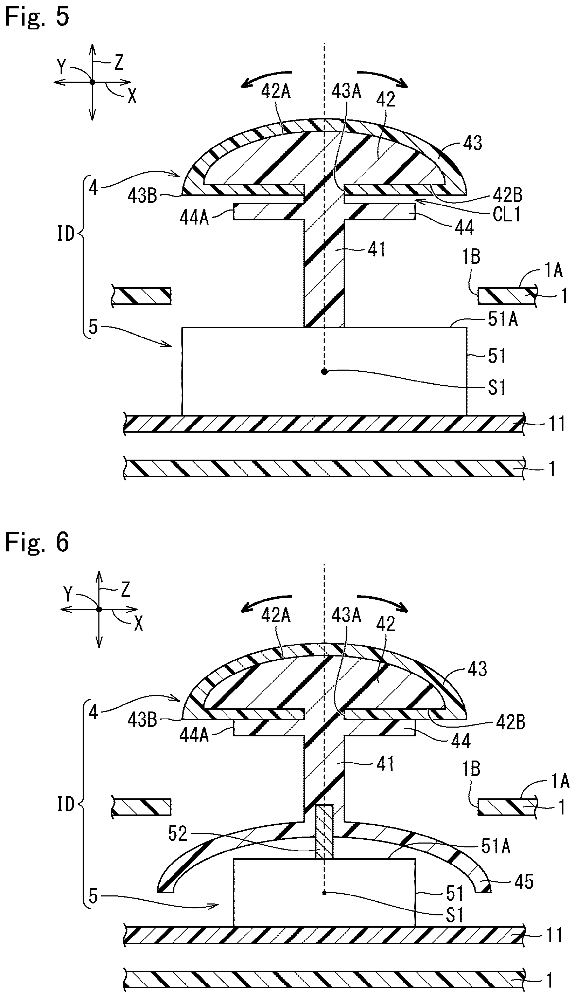

In the above embodiment, the cover protector 44 is in contact with the cover 43 outside the controller housing 1. However, the disclosure is not limited to the above embodiment. As shown in Fig. 5, for example, the cover protector 44 may face the cover 43 outside the controller housing 1. In other words, the cover protector 44 and the cover 43 may define a clearance CL1 between them. This structure also reduces the likelihood that the user unintentionally touches, with a finger, the portion of the cover 43 nearer the shaft 41 than the outer edge 44A of the cover protector 44 in the plane direction, thus maintaining the contact between the head 42 and the cover 43. The cover protector 44 may surround the shaft 41 and may not be in contact with the cover 43. This structure also reduces the likelihood that the user unintentionally touches, with a finger, the portion of the cover 43 nearer the shaft 41 than the outer edge 44A of the cover protector 44 in the plane direction, thus maintaining the contact between the head 42 and the cover 43.

### Third Modification

In the above embodiment, the shaft 41 is cylindrical and extends from the inside to the outside of the controller housing 1 in the axial direction. However, the disclosure is not limited to the above embodiment. As shown in Fig. 6, for example, the base 5 may include a protrusion 52 protruding in the axial direction from the upper surface 51A of the module housing 51. The protrusion 52 may be received in a basal end of the shaft 41. As shown in Fig. 6, the operable member 4 may include a flange 45 protruding outward from the basal end of the shaft 41 inside the controller housing 1. As shown in Fig. 6, the flange 45 may be dome-shaped. The flange 45 may be larger than the opening 1B of the controller housing 1. This reduces the likelihood that components inside the controller housing 1, such as the base 5, are visible from outside the controller housing 1 through the opening 1B.

### Fourth Modification

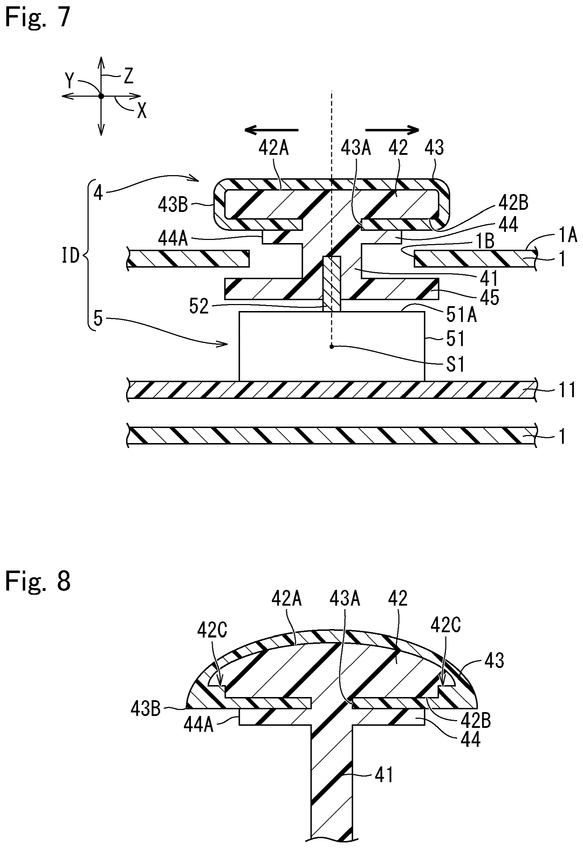

In the above embodiment, the operable member 4 is tiltable in the plane direction parallel to the upper surface 1A of the controller housing 1. However, the disclosure is not limited to the above embodiment. As shown in Fig. 7, for example, the operable member 4 may be slidable in the plane direction parallel to the upper surface 1A of the controller housing 1. In the above embodiment, the head 42 is hemispherical or substantially hemispherical. However, the disclosure is not limited to the above embodiment. As shown in Fig. 7, for example, the head 42 may be a flat plate or a substantially flat plate. The profile of the head 42 may be, for example, a circle, an oval, or a polygon when viewed in the axial direction. The flange 45 may be a flat plate or a substantially flat plate. The profile of the flange 45 may be, for example, a circle, an oval, or a polygon when viewed in the axial direction. The upper surface 1A of the controller housing 1 and the upper surface 51A of the module housing 51 may be other than flat surfaces, and may be curved surfaces. In this case, the plane direction parallel to the upper surface 1A of the controller housing 1 or the upper surface 51A of the module housing 51 may be a direction along the curved surface.

### Fifth Modification

As shown in Fig. 8, the head 42 may include a step 42C recessed from its outer peripheral portion in the axial direction away from the base 5 and the controller housing 1. The outer peripheral portion is located outward from the outer edge of the cover protector 44 when viewed in the axial direction. This structure increases the area of contact between the cover 43 and the outer peripheral portion of the head 42 not protected by the cover protector 44, thus further maintaining the contact between the head 42 and the cover 43. The step 42C may have an acute angle, a right angle, or an obtuse angle. The step 42C with an acute angle (or in other words, the step 42C with a Z-shaped cross section) increases the area of contact between the cover 43 and the outer peripheral portion of the head 42 not protected by the cover protector 44, thus further maintaining the contact between the head 42 and the cover 43.

### Sixth Modification

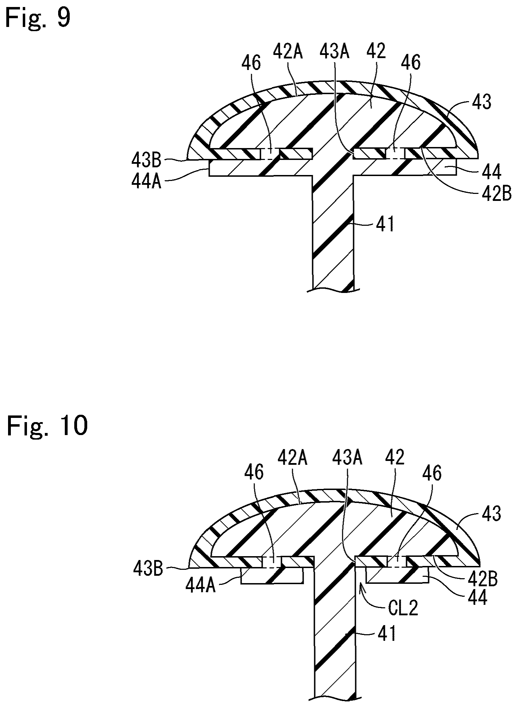

As shown in Fig. 9, the operable member 4 may further include pillars 46 extending in the axial direction between the head 42 and the cover protector 44. The pillars 46 extend through the cover 43 in the axial direction and are in contact with the head 42 and the cover protector 44. In this structure, the pillars 46 can catch the cover 43, reducing the likelihood of the cover 43 slipping off. The pillars 46 in contact with the cover 43 increase the areas of contact between the cover 43 and the head 42 and between the cover 43 and the cover protector 44, thus further maintaining the contact between the head 42 and the cover 43. The pillars 46 may be in contact with either the head 42 or the cover protector 44. In this structure as well, the pillars 46 increase the area of contact between the cover 43 and the head 42 or between the cover 43 and the cover protector 44, thus further maintaining the contact between the head 42 and the cover 43. The pillars 46 may be integral with either the head 42 or the cover protector 44, or both. Although Fig. 9 shows two pillars 46, a single pillar 46 or three or more pillars 46 may be used. Each pillar 46 may have any shape, and may be, for example, a cylinder, an elliptic cylinder, or a polygonal prism. The pillars 46 may not be in contact with the cover 43.

### Seventh Modification

In the above embodiment, the cover protector 44 is an annular protrusion protruding outward from the shaft 41. However, the disclosure is not limited to the above embodiment. As shown in Fig. 10, for example, the cover protector 44 may not be in contact with the shaft 41 in the X-direction or the Y-direction. The cover protector 44 and the shaft 41 may not be integral with each other. In other words, an inner edge of the cover protector 44 and the shaft 41 may define a clearance CL2 between them. In this case, the cover protector 44 is connected to the head 42 with the pillars 46 between the cover protector 44 and the head 42 to maintain the contact between the head 42 and the cover 43. In this case as well, the cover protector 44, similarly to the cover protector 44 in contact with the shaft 41, reduces the likelihood that the user unintentionally touches, with a finger, the portion of the cover 43 nearer the shaft 41 than the outer edge 44A of the cover protector 44 in the plane direction, thus maintaining the contact between the head 42 and the cover 43. In this case, the cover protector 44 may not cover the edge 43A of the cover 43.

### Eighth Modification

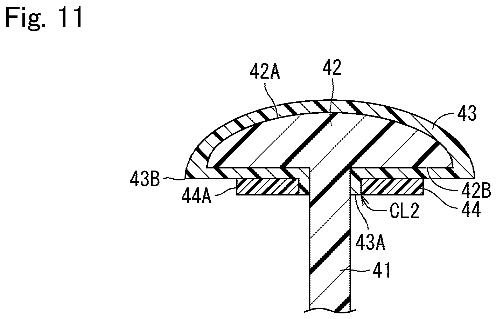

As shown in Fig. 11, the edge 43A of the cover 43 may extend parallel to the shaft 41 in a direction away from the head 42, extending through the clearance CL2 between the shaft 41 and the inner edge of the cover protector 44. In this case, the cover protector 44 may be fitted to the edge 43A of the cover 43 without being connected to the head 42 with the pillars 46. The cover protector 44 may be formed from a resin different from the resin used for the shaft 41 and the head 42.

The embodiments and modifications described above may be combined with one another to produce their advantageous effects.

Although the disclosure is fully described in specific embodiments with reference to the accompanying drawings, modifications or changes to the embodiments are apparent to those skilled in the art. Such modifications or changes are intended to fall within the disclosure without departing from the scope of the disclosure defined by the appended claims.

### INDUSTRIAL APPLICABILITY

The input device and the controller according to one or more embodiments of the disclosure that can maintain the contact between the head of the operable member and the cover are usable in various electronic devices such as game consoles, smartphones, and personal computers.

### EXPLANATION OF REFERENCES

- 1: controller housing
- 1A: upper surface
- 1B: opening
- 2: operation button
- 3: operation button
- 4: operable member
- 5: base
- 11: board
- 41: shaft
- 41A: distal end
- 42: head
- 42A: upper portion
- 42B: lower portion
- 42C: step
- 43: cover
- 43A: edge
- 44: cover protector
- 44A: outer edge
- 45: flange
- 51: module housing
- 51A: upper surface
- 52: protrusion
- ID: input device

## Claims

1. An input device, comprising:
a module housing; and
an operable member protruding from a surface of the module housing, the operable member being tiltable or slidable in a plane direction parallel to the surface of the module housing, the operable member including
a shaft extending in a direction intersecting with the plane direction of the module housing,
a head located outside the module housing and connected to an end of the shaft, the head extending in the plane direction,
a cover covering an upper portion and a lower portion of the head, and
a cover protector surrounding the shaft, the cover protector being in contact with a portion of the cover covering the lower portion of the head.

2. The input device according to claim 1, wherein
the cover is between the head and the cover protector in the direction in which the shaft extends.

3. The input device according to claim 1 or claim 2, wherein
the cover protector protrudes from the shaft in the plane direction.

4. The input device according to claim 1, wherein
the cover has an edge surrounding the shaft at a position adjacent to the lower portion of the head, and
the cover protector covers the edge of the cover.

5. The input device according to claim 1, wherein
the cover has an edge in contact with the shaft at a position adjacent to the lower portion of the head.

6. The input device according to claim 1, wherein
the cover protector has a smaller profile than the cover when viewed in the direction in which the shaft extends.

7. The input device according to claim 1, wherein
the head includes a step recessed from an outer peripheral portion of the head in the direction in which the shaft extends away from the module housing, and the outer peripheral portion is located outward from an outer edge of the cover protector when viewed in the direction in which the shaft extends.

8. The input device according to claim 1, wherein
the operable member further includes, between the head and the cover protector, a pillar extending in the direction in which the shaft extends, and
the pillar is in contact with the cover and the head or with the cover and the cover protector.

9. The input device according to claim 8, wherein
the pillar extends through the cover in the direction in which the shaft extends, and the pillar is in contact with the head and the cover protector.

10. A controller, comprising:
a controller housing grippable by a user; and
an operable member partly protruding from a surface of the controller housing, the operable member being tiltable or slidable in a plane direction parallel to the surface of the controller housing, the operable member including
a shaft extending, in a direction intersecting with the plane direction, from an inside to an outside of the controller housing,
a head located outside the controller housing and connected to an end of the shaft, the head extending in the plane direction,
a cover covering an upper portion and a lower portion of the head, and
a cover protector located outside the controller housing, the cover protector surrounding the shaft and facing a portion of the cover covering the lower portion.

11. The controller according to claim 10, wherein
the cover is between the head and the cover protector in the direction in which the shaft extends.

12. The controller according to claim 10 or claim 11, wherein
the cover protector protrudes from the shaft in the plane direction.

13. The controller according to claim 10, wherein
the cover has an edge surrounding the shaft at a position adjacent to the lower portion of the head, and
the cover protector covers the edge of the cover.

14. The controller according to claim 10, wherein
the cover protector surrounds the shaft and is in contact with the cover at a position adjacent to the lower portion of the head.

15. The controller according to claim 10, wherein
the cover has an edge in contact with the shaft at a position adjacent to the lower portion of the head.

16. The controller according to claim 10, wherein
the cover protector has a smaller profile than the cover when viewed in the direction in which the shaft extends.

17. The controller according to claim 10, wherein
the head includes a step recessed from an outer peripheral portion of the head in the direction in which the shaft extends away from the controller housing, and the outer peripheral portion is located outward from an outer edge of the cover protector when viewed in the direction in which the shaft extends.

18. The controller according to claim 10, wherein
the operable member further includes, between the head and the cover protector, a pillar extending in the direction in which the shaft extends, and
the pillar is in contact with the cover and the head or with the cover and the cover protector.

19. The controller according to claim 18, wherein
the pillar extends through the cover in the direction in which the shaft extends, and the pillar is in contact with the head and the cover protector.
